(19) Europäisches Patentamt
European Patent Office
Office européen des brevets

(11) **EP 1 435 160 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(21) Anmeldenummer: **02769928.9**

(22) Anmeldetag: **07.09.2002**

(51) Int Cl.:
*H04L 27/36* (2006.01)     *H03F 1/02* (2006.01)

(86) Internationale Anmeldenummer:
**PCT/DE2002/003322**

(87) Internationale Veröffentlichungsnummer:
**WO 2003/032597 (17.04.2003 Gazette 2003/16)**

(54) **VERFAHREN ZUR REDUZIERUNG DER RANDAUSSENDUNGEN VON AM-SENDERN IM DIGITALBETRIEB**

METHOD FOR REDUCING TRANSMISSIONS IN BOUNDARY ZONES, IN AMPLITUDE MODULATION TRANSMITTERS OPERATING IN DIGITAL MODE

PROCEDE DE REDUCTION D'EMISSIONS EN ZONES LIMITES, DANS DES EMETTEURS A MODULATION EN AMPLITUDE FONCTIONNANT EN MODE NUMERIQUE

(84) Benannte Vertragsstaaten:
**AT BE BG CH CY CZ DE DK EE ES FI FR GB GR IE IT LI LU MC NL PT SE SK TR**

(30) Priorität: **04.10.2001 DE 10150937**

(43) Veröffentlichungstag der Anmeldung:
**07.07.2004 Patentblatt 2004/28**

(73) Patentinhaber: **Deutsche Telekom AG**
**53113 Bonn (DE)**

(72) Erfinder: **RUDOLPH, Dietmar**
**14163 Berlin (DE)**

(56) Entgegenhaltungen:
**EP-A- 0 708 545        EP-A- 0 942 563**

• **RUDOLPH D: "OUT-OF-BAND EMISSIONS OF DIGITAL TRANSMISSIONS USING KAHN EER TECHNIQUE" IEEE TRANSACTIONS ON MICROWAVE THEORY AND TECHNIQUES, IEEE INC. NEW YORK, US, Bd. 50, Nr. 8, August 2002 (2002-08), Seiten 1979-1983, XP001123401 ISSN: 0018-9480**

**Beschreibung**

Die Erfindung betrifft das Gebiet der AM-Rundfunksender (AM- Amplitudenmodulation), die für digitale Ausstrahlung eingesetzt werden.

Die üblichen Sendertypen sind nichtlineare AM-Sender mit RF-Zweig (Radio Frequency) und Amplituden-Zweig. Aus Gründen des höheren Wirkungsgrades arbeiten RF-Zweig und Amplituden-Zweig im Schaltbetrieb. In der Endstufe des Senders werden RF-Signal und Amplituden-Signal mit einander multipliziert, was aus Gründen des Wirkungsgrades ebenfalls im Schaltbetrieb erfolgt. Der Schaltbetrieb wird durch das RF-Signal gesteuert. Für das Amplituden-Signal ist der Eingang des Multiplizieres dagegen linear.

Die Erzeugung des modulierten digitalen Signals erfolgt mittels zweier zueinander orthogonaler Teilsignale (I und Q). Das I-Signal ("In Phase") wird auf eine Kosinusschwingung mit der Frequenz Ft (Trägerfrequenz) moduliert. Das Q-Signal ("Quadratur") wird auf eine Sinusschwingung der gleichen Frequenz Ft moduliert. Die Summe beider modulierten Schwingungen ergibt das komplexe modulierte Datensignal (Kosinus 0 - 180 Grad, Sinus -90 - +90 Grad). Das modulierte I/Q-Signal wird durch Filter so geformt, dass es exakt die vorgeschriebene Kurvenform mit der gewünschten Bandbreite hat.

Für die digitale Ausstrahlung wird das modulierte I/Q-Signal so umgewandelt, dass die beiden Signale, Amplituden-Signal (A-Signal) und phasenmoduliertes Trägersignal (RF-P-Signal), daraus entstehen, die geeignet sind, den AM-Sender richtig anzusteuern. Am Ausgang des AM-Senders ergibt sich hernach wiederum das modulierte I/Q-Signal mit größerer Leistung.

Um die Randaussendungen zu minimieren, ist es erforderlich, dass A-Signal und RF-P-Signal zeitgleich zur Multiplikation in der Senderendstufe anstehen. Daraus folgt, dass die Laufzeit (Delay) zwischen beiden Signalen ausgeglichen werden muss und die verbleibende Differenz bei einer Kanalbandbreite von 9 -10 KHz nicht größer als 0,3 Mikrosekunden sein darf, da die zulässige Laufzeitdifferenz reziprok proportional zur Kanalbandbreite ist.

Da sowohl das A-Signal als auch das RF-P-Signal eine wesentlich größere Bandbreite als das I/Q-Signal aufweisen, sollte innerhalb des Senders die erhöhte Bandbreite verfügbar sein, was aber aus technischen und wirtschaftlichen Gründen nicht in ausreichendem Maße realisiert werden kann. Die ungenügenden Bandbreiten verursachen unerwünschte Randaussendungen, die minimiert werden müssen.

Aus der Literatur DE-A1-101 12 025 ist bekannt, dass die Bandbreite von A-Signal und RF-P-Signal verringert werden kann, wenn das Vektodiagramm des I/Q-Signals um den Punkt 0/0 ein Loch erhält. Je größer das Loch im Vektordiagramm des I/Q-Signals ist, um so geringer sind die Steigungen der Randaussendungen im Spektrum. Der Zusammenhang ist dadurch gegeben, dass spektral die Steigungen der Randaussendungen infolge der Laufzeitunterschiede mit der Steigung des RF-P-Signals übereinstimmen und durch das Loch im Vektordiagramm teilweise korrigiert werden können. Das Loch im Vektordiagramm kann nicht beliebig groß gemacht werden, weil sonst die Modifikation des Signals als Störung auftritt.

Auch ist bekannt, dass der Schulterabstand der Randaussendungen sowohl von der Größe der Laufzeitdifferenz als auch von der verfügbaren Bandbreite im Amplituden-Zweig und auch im RF-Zweig des Senders abhängen. Daraus folgt, dass die Laufzeitdifferenz gegen Null gehen sollte und die Bandbreite in den Zweigen so groß wie möglich sein sollte.

Eine möglichst große Bandbreite für beide Zweige zu realisieren ist damit das Ziel, um die Randaussendungen des AM-Senders weiter zu reduzieren. Für den Amplituden-Zweig kann durch laufzeitmäßige Entzerrung ein linearer Phasenverlauf und damit eine konstante Laufzeit bis zur Grenzfrequenz erreicht werden.

Das phasenmodulierte RF-P-Signal hat wie ein frequenzmoduliertes Signal eine unendliche Anzahl von Seitenspektrallinien, so dass die zur Übertragung benötigte Bandbreite theoretisch auch unendlich groß sein müsste. Da die Gewichtung der Spektrallinien schnell abnimmt, kann durch den Einsatz eines geeigneten Filters erreicht werden, dass nur ein Minimum an Verzerrungen aufgrund der begrenzten Bandbreite auftritt. Es ist bekannt, dass ein Filter mit Gaußscher Übertragungsfunktion diese Bedingung erfüllt.

Die Erfindung stellt sich die Aufgabe, ein Verfahren anzubieten, mit dem die durch den Einsatz eines Gauß-Filters erzielbare Beeinflussung des Frequenzganges für das RF-P-Signal zu nutzen, um die Verzerrungen aufgrund der Bandbreitenbegrenzung zu minimieren und dadurch die Randaussendungen bei der Ausstrahlung digitaler Signale durch AM-Sender zu reduzieren.

Das Verfahren geht davon aus, dass ein Filter mit Gauß-förmigen Amplitudengang und linearer Phase für das RF-P-Signal verwendet wird. Dadurch erhält das RF-P-Signal am Ausgang des Filters einen Amplitudenverlauf entsprechend dieser Übertragungsfunktion. Könnte das RF-P-Signal in dieser Form mit dem A-Signal multipliziert werden, wäre eine Reduzierung der Randaussendungen zu verzeichnen und das gewünschte Ergebnis recht einfach zu realisieren. Da aber die Senderendstufe aus Gründen des Wirkungsgrades im Schaltbetrieb arbeitet, würde der durch das Gauß-Filter erzielte Amplitudenverlauf des RF-P-Signals wieder abgeschnitten werden.

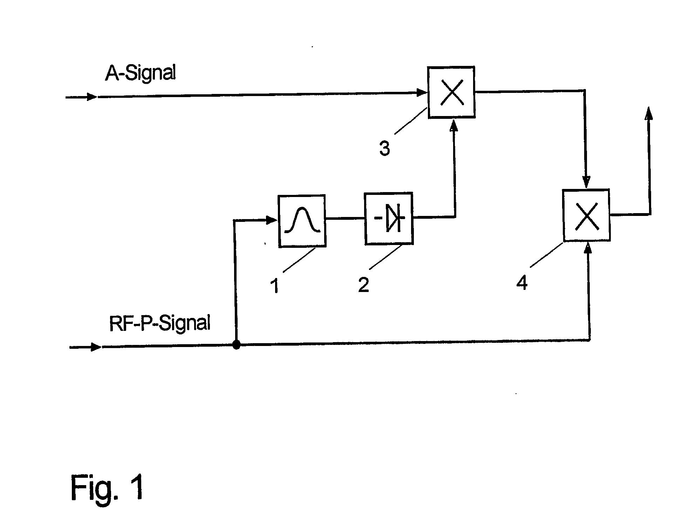

Für die Lösung der Aufgabe wird deshalb folgende Verfahrensweise angewendet. Das RF-P-Signal wird aus dem RF-Zweig abgezweigt und über ein Filter (1) mit Gauß-förmigen Amplitudengang und linearer Phase geführt. Am Ausgang des Filters (1) hat das modifizierte RF-P-Signal einen Amplitudenverlauf entsprechend der Gaußschen Übertragungsfunktion. Diese Amplitudenschwankungen werden mittels eines Hüllkurvengleichrichters (2) detektiert, so dass das Hüllkurvensignal als Korrektursignal zur Verfügung steht, mit dem das A-Signal in einem zusätzlich in den A-Zweig implementierten Multiplizierer (3) multipliziert wird. Das im Ergebnis der Multiplikation entstehende korrigierte A-Signal gelangt zum linearen Eingang der Senderendstufe (4), während am geschalteten Eingang der Senderendstufe das RF-P-Signal in seiner ursprüglichen Form anliegt (siehe Fig. 1). Durch die Multiplikation dieser beiden Signale in der Senderendstufe (4) wird das digitale Sendesignal gebildet, das aufgrund des Korrekturverfahrens wesentlich geringere Randaussendungen verursacht.

Das beschriebene Verfahren führt zu dem gewünschten Ergebnis, weil zum einen der Multiplizierer der Senderendstufe für den A-Eingang ohne Verringerung des Wirkungsgrades linearen Betrieb zulässt und zum anderen weil für ein Produkt das assoziative Gesetz gilt, das hier wie folgt angewendet wird:

$$r * a = (1 * k) * a = 1 * (k * a)$$

r - gefiltertes RF-P-Signal (mit Amplitudenschwankungen)
a - Amplituden-Signal
l - ungefiltertes RF-P-Signal (konstante Amplitude)
k - Amplitudenschwankungen des gefilterten RF-P-Signals = Korrektursignal

**Liste der verwendeten Bezugszeichen**

| 1 | Gauß-Filter |
|---|---|
| 2 | Hüllkurvengleichrichter |
| 3 | Multiplizierer |
| 4 | Senderendstufe |

A-Signal     Amplituden-Signal
RF-P-Signal  phasenmoduliertes RF (Radio Frequenz) Signal

**Patentansprüche**

1. Verfahren zur Reduzierung der Randaussendungen von AM-Sendern im Digitalbetrieb, bei denen aus dem digitalen Modulationssignal das Amplituden-Signal zur Ansteuerung des linearen Eingangs der Senderendstufe und das phasenmodulierte Trägersignal, RF-P-Signal, zur Ansteuerung des geschalteten Eingangs der Senderendstufe gebildet werden und Amplituden-Signal und RF-P-Signal in der Senderendstufe (4) multiplikativ vereint werden, **dadurch gekennzeichnet,**

**dass** für das RF-P-Signal die infolge der Bandbegrenzung im RF-Zweig auftretenden Verzerrungen, die zu unerwünschten Randaussendungen führen, durch den Einsatz eines geeigneten Filters gemindert werden,
**dass** als Filter für das phasenmodulierte RF-P-Signal ein Gauß-Filter (1) mit linearer Phase verwendet wird,
**dass** das RF-P-Signal im RF-Zweig abgegriffen wird und in einem separaten Zweig das Gauß-Filter (1) durchläuft,
**dass** das gefilterte RF-P-Signal einem Hüllkurvengleichrichter (2) zur Detektierung der Amplitudenschwankungen zugeführt wird,
**dass** die detektierten Amplitudenschwankungen als Korrektursignal mit dem Amplituden-Signal in einem zusätzlich in den das Amplitudensignal führenden Zweig implementierten Multiplizierer (3) vereinigt werden, und
**dass** das korrigierte Amplituden-Signal dem linearen Eingang der Senderendstufe (4) zugeführt und in der Senderendstufe mit dem RF-P-Signal multipliziert wird.

**Claims**

1. Method for reducing the out-of-band emissions of AM transmitters in digital operation, wherein the amplitude signal for driving the linear input of the transmitter output stage and the phase-modulated carrier signal, RF-P signal, for driving the switched input of the transmitter output stage are generated from the digital modulation signal, and the amplitude signal and the RF-P signal are multiplicatively combined in the transmitter output stage (4), **characterized in that**
for the RF-P signal the distortions arising due to band-limiting in the RF path, which cause undesirable out-of-band emissions, are reduced by the use of a suitable filter,
**in that** a Gaussian filter (1) with linear phase is used as the filter for the phase-modulated RF-P signal,
**in that** the RF-P signal is tapped in the RF path and passes through a separate path of the Gaussian filter (1),
**in that** the filtered RF-P signal is fed to an envelope detector (2) for detection of the amplitude variations,
**in that** the detected amplitude variations are combined as a correction signal with the amplitude signal in a multiplier (3) that is additionally implemented in the path carrying the amplitude signal, and
**in that** the corrected amplitude signal is fed to the linear input of the transmitter output stage (4) and is multiplied by the RF-P signal in the transmitter output stage.

**EP 1 435 160 B1**

**Revendications**

1. Procédé de réduction des émissions hors bande d'émetteurs AM en mode numérique, dans lesquels le signal d'amplitude destiné à l'activation de l'entrée linéaire de l'étage final d'émetteur et le signal de porteuse modulé en phase, le signal RF-P, destiné à l'activation de l'entrée commutée de l'étage final d'émetteur sont formés à partir du signal de modulation numérique et dans lesquels le signal d'amplitude et le signal RF-P sont combinés de manière multiplicative dans l'étage final d'émetteur (4),
**caractérisé**
**en ce que** pour le signal RF-P, les distorsions qui apparaissent en raison de la limitation de bande dans la branche RF et qui entraînent des émissions hors bande non désirées, sont réduites par l'utilisation d'un filtre approprié,
**en ce qu'**on utilise comme filtre pour le signal RF-P modulé en phase, un filtre de Gauss (1) à phase linéaire,
**en ce que** le signal RF-P est pris dans la branche RF et traverse le filtre de Gauss (1) dans une branche séparée,
**en ce que** le signal RF-P filtré est amené à un redresseur d'enveloppante (2) pour la détection des variations d'amplitude,
**en ce que** les variations d'amplitude détectées sont combinées, comme signal de correction, avec le signal d'amplitude dans un multiplicateur (3) intégré en plus dans la branche portant le signal d'amplitude, et
**en ce que** le signal d'amplitude corrigé est amené à l'entrée linéaire de l'étage final d'émetteur (4) et multiplié avec le signal RF-P dans l'étage final d'émetteur.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10112025 A1